**Europäisches Patentamt**

**European Patent Office**

**Office européen des brevets**

(19)

(11) Veröffentlichungsnummer : **0 446 486 B1**

## (12) EUROPÄISCHE PATENTSCHRIFT

(45) Veröffentlichungstag der Patentschrift :
**01.12.93 Patentblatt 93/48**

(51) Int. Cl.⁵ : **B32B 27/08, F16L 59/02, F25D 23/06, E04B 1/80**

(21) Anmeldenummer : **90125659.4**

(22) Anmeldetag : **28.12.90**

(54) **Formkörper zur Wärmedämmung.**

(30) Priorität : **16.03.90 DE 4008480**
**17.09.90 DE 4029405**

(43) Veröffentlichungstag der Anmeldung :
**18.09.91 Patentblatt 91/38**

(45) Bekanntmachung des Hinweises auf die
Patenterteilung :
**01.12.93 Patentblatt 93/48**

(84) Benannte Vertragsstaaten :
**AT BE CH DE DK ES FR GB GR IT LI LU NL SE**

(56) Entgegenhaltungen :
**EP-A- 0 164 006**
**EP-A- 0 236 099**
**EP-A- 0 396 961**
**DE-U- 8 627 074**
**US-A- 4 284 674**
**US-A- 4 407 873**

(73) Patentinhaber : **Degussa Aktiengesellschaft**
**Weissfrauenstrasse 9**
**D-60311 Frankfurt (DE)**

(72) Erfinder : **Sextl, Gerhard, Dr.**
**Frohnbügel 11**
**W-8752 Geiselbach (DE)**
Erfinder : **Reuter, Roland**
**Roetgerweg 12**
**W-6100 Darmstadt (DE)**
Erfinder : **Strack, Hans, Dr.**
**Riemenschneiderstrasse 1**
**W-8755 Alzenau (DE)**
Erfinder : **Kleinschmit, Peter, Dr.**
**Wildaustrasse 19**
**W-6450 Hanau 9 (DE)**
Erfinder : **Schwarz, Rudolf, Dr.**
**Taunusstrasse 2**
**W-8755 Alzenau-Wasserlos (DE)**

## Beschreibung

Die Erfindung betrifft einen Formkörper, vorzugsweise plattenförmig, für die Verwendung als Wärmedämmung sowie das Verfahren zu seiner Herstellung.

Es ist bekannt, Wärmedämmplatten oder flache, ebene Wärmedämmkörper auf Basis von gefällter Kieselsäure herzustellen, die evakuiert und mit einer mehrschichtigen Umhüllung versehen sind.

So beschreiben die EP-A 0 190 582 sowie die EP-A 0 254 993 eine Umhüllung aus Verbundfolien, die zusätzlich eine Metallfolie aus z. B. Aluminium enthalten. Diese Folien sollen luft- und wasserdicht sein.

Die US-A-4,284,674 (Sheptak) beschreibt Wärmedämmpanels, die als Füllkörper Glasfaser enthalten und evakuiert sind. Die Umhüllung besteht aus einer mehrschichtigen Folie.

Die EP-B 0 164 006 beschreibt Wärmedämmplatten, die feinteilige Metalloxide enthalten und evakuiert sind. Das Umhüllungsmaterial kann eine Verbundfolie mit einer Schichtfolge aus thermoplastischem Material/Metallfolie/thermoplastischem Material sein.

Die japanische Offenlegungsschrift Sho 62-207 777 (12.09.1987) beschreibt wärmeisolierende Elemente, die hergestellt werden, indem in einen Behälter aus heißversiegelbarem Kunststofflaminat Perlit oder andere leicht poröse Materialien eingefüllt werden und das Innere dieses Behälters dann evakuiert wird.

Heißversiegelte wärmeisolierende Elemente bestehen aus Kunststofflaminat der Dicke 25 $\mu$m mit einer Wasserdampfdurchlässigkeit 1,0 g/m$^2$.d bei 38 °C und 90 % relativer Feuchtigkeit sowie der Sauerstoffdurchlässigkeit 2,0 cm$^3$/m$^2$.d bei 23 °C und 90 % relativer Feuchtigkeit. Die Laminate bestehen aus Vinylidenchlorid-Vinylchlorid-Copolymer, das zumindest einseitig mit einer 100 bis 1000 Angström dicken Aluminiumschicht bedampft ist. Es wird zumindest eine Laminatschicht verwendet.

Die bekannte Verwendung von metallbeschichteten Verbundfolien hat den Nachteil, daß parallel zur Folienoberfläche Wärme geleitet werden kann. Bei der Anwendung in Isolationsmaterialien führt dies zu unerwünschten Wärmebrücken an den Rändern des Wärmedämmkörpers zwischen Kalt- und Warmseite.

Der damit verbundene nachteilige Einfluß auf die Gesamt-Wärmeleitfähigkeit eines Wärmedämmkörpers wird bei der Wärmeleitfähigkeitsmessung nach dem absoluten Einplattenverfahren mit Schutzringtechnik nach Kohlrausch (F. Kohlrausch: "Praktische Physik", Bd. 1, 22. Aufl., B.G. Teubner Verlag, Stuttgart, 1968, S. 375 ff.) nicht erfaßt.

Ein Wärmedämmkörper, der gemäß EP-A 0 190 582 unter Verwendung einer metallhaltigen Folie gefertigt wurde, zeigt, gemessen nach dem oben genannten Verfahren, bei 23 °C eine Wärmeleitfähigkeit von 8 mW/(m.K). Wählt man eine Meßanordnung ohne Schutzring, so steigt die Wärmeleitfähigkeit - abhängig von Formkörper-Geometrie und Größe und von der Metallschichtdicke in der Umhüllungsfolie - auf zum Teil erheblich höhere Werte an.

Die Isolationsleistung des gesamten Wärmedämmkörpers hängt also auch entscheidend davon ab, ob die bei der Herstellung verwendete Umhüllungsfolie metallhaltig ist oder nicht.

Aus der älteren Patentanmeldung DE-A-39 15 170 ist ein Formkörper für die Verwendung als Wärmedämmung bekannt, der aus einem feinverteilten, pulverförmigen bzw. faserförmigen Stoff, der eine Wasseraufnahmekapazität von 4 bis 50 Gew.-% bei 23 °C und 85 % relativer Feuchte hat, und einer metallfreien Umhüllung, die diesem feinverteilten, pulverförmigen bzw. faserförmigen Stoff umhüllt und dabei eine Wasserdampfdurchlässigkeit von 0,1 bis 0,5 g/m$^2$.d bei 23 °C und 85 % relativer Feuchte und Gasdurchlässigkeiten von in der Summe von 0,1 bis 0,5 cm$^3$/(m$^2$.d.bar) bei 23 °C aufweisen, besteht.

Diese bekannten Formkörper können unter den genannten Bedingungen ihre niedrige Wärmeleitfähigkeit über nur etwa 3 Jahre erhalten.

Sollen die Wärmedämmkörper für die Isolierung von Kühlgeräten eingesetzt werden, müssen sie die niedrige Wärmeleitfähigkeit über einen erheblich längeren Zeitraum behalten.

Es besteht somit die Aufgabe, Wärmedämmkörper herzustellen, die sowohl quer als auch längs zum Verlauf der Verbundsfolie eine niedrige Wärmeleitfähigkeit aufweisen und diese niedrige Wärmeleitfähigkeit über einen erheblich längeren Zeitraum als die obengenannten 3 Jahre aufrechterhalten.

Gegenstand der Erfindung ist ein Formkörper, vorzugsweise plattenförmig, für die Verwendung als Wärmedämmung, hergestellt aus

a) einem feinverteilten, pulverförmigen bzw. faserförmigen Stoff, der eine Wasseraufnahmekapazität von 4 bis 50 Gew.-% bei 23 °C und 85 % relativer Feuchte hat,

b) einer metallfreien Umhüllung, die diesen feinverteilten, pulverförmigen bzw. faserförmigen Stoff umhüllt und dabei eine Wasserdampfdurchlässigkeit von 0,02 bis < 0,1 g/(m$^2$.d) bei 23 °C und 85 % relativer Feuchte und Gasdurchlässigkeiten für $N_2$, $O_2$ und $CO_2$ von in der Summe von 0,05 bis 0,5 cm$^3$/(m$^2$.d.bar) bei 23 °C aufweist,

mit der Eigenschaft, Wasser bis zu einer Menge von 2 bis 15 Gew.-% aufzunehmen, ohne daß dabei seine Wärmeleitfähigkeit um mehr als 25 % verschlechtert wird.

Der erfindungsgemäße Wärmedämmformkörper kann evakuiert sein. Bevorzugterweise beträgt der Innendruck ca. 1 mbar.

Das Schüttgewicht des in den Wärmedämmformkörper enthaltenen feinverteilten Stoffes kann 150 bis 250 g/l, vorzugsweise 180 bis 220 g/l betragen.

Der feinverteilte, pulverförmige bzw. faserförmige Stoff kann in einer mikroporösen Umhüllung verpreßt werden.

Der feinverteilte, pulverförmige bzw. faserförmige Stoff kann in einer mikroporösen Umhüllung getrocknet werden.

In einer bevorzugten Ausführungsform kann die mikroporöse Umhüllung, die den feinverteilten, pulverförmigen bzw. faserförmigen Stoff in gepreßtem und getrocknetem Zustand enthält, in die metallfreie Umhüllung eingebracht werden.

Den erfindungsgemäßen Formkörper kann man herstellen, indem man

a) gegebenenfalls einen feinverteilten, pulverförmigen bzw. faserförmigen Stoff, der eine Wasseraufnahmekapazität von 4 bis 50 Gew.-% (bei 23 °C und 85 % relativer Feuchte) aufweist, unter Bedingungen trocknet, die für ein Austreiben des Oberflächenwassers ausreichen,

b) den pulverförmigen bzw. faserförmigen Stoff gegebenenfalls in eine Form verpreßt,

c) den gegebenenfalls getrockneten und gegebenenfalls verpreßten pulverförmigen bzw. faserförmigen Stoff in eine metallfreie Umhüllung, die eine Öffnung zum Evakuieren und eine Wasserdampfdurchlässigkeit von 0,02 bis < 0,1 $g/(m^2.d)$ bei 23 °C und 85 % relativer Feuchte) und Gasdurchlässigkeiten für $N_2$, $O_2$ und $CO_2$ von in der Summe 0,05 bis 0,5 $cm^3/(m^2.d.bar)$ bei 23 °C aufweist, einbringt,

d) die metallfreie Umhüllung evakuiert und

e) die Evakuierungsöffnung der metallfreien Umhüllung unter Erhalt des Vakuums im Innern der Umhüllung verschließt.

In einer bevorzugten Ausführungsform des erfindungsgemäßen Verfahrens kann man die metallfreie Umhüllung auf einen Druck von etwa 1 mbar evakuieren.

In einer bevorzugten Ausführungsform des erfindungsgemäßen Verfahrens kann man den feinverteilten, pulverförmigen bzw. faserförmigen Stoff in einer mikroporösen Umhüllung trocknen.

In einer besonders bevorzugten Ausführungsform des erfindungsgemäßen Verfahrens kann man den feinverteilten, pulverförmigen bzw. faserförmigen Stoff in einer mikroporösen Umhüllung verpressen und gegebenenfalls danach trocknen.

Die Trocknung des feinverteilten, pulverförmigen bzw. faserförmigen Stoffes kann in einer bevorzugten Ausführungsform der Erfindung mittels Mikrowellen erfolgen.

Als mikroporöse Umhüllung, die im Prinzip dazu dient, den feinteiligen, pulverförmigen Stoff während des Trocknens und Verpressens zusammenzuhalten, kann eine Folie oder ein Vlies-Stoff aus z. B. Polypropylen, Polyester oder Filterpapier verwendet werden.

Im allgemeinen kann zu diesem Zweck eine Folie oder ein Material verwendet werden, das Gase (z. B. Luft) und Feuchtigkeit durchläßt und den feinteiligen, pulverförmigen Stoff zurückhält.

Als feinverteilter, pulverförmiger Stoff kann im Prinzip jeder Stoff verwendet werden, dessen chemische Eigenschaften sich im Laufe der Zeit nicht verändern, und der eine Wasseraufnahmekapazität von 4 - 50 Gew.-% bei 23 °C und 85 % relativer Feuchte besitzt.

Die Wassermenge, die der erfindungsgemäße Formkörper aufnehmen darf, entspricht der Menge an Wasser, bei der die Wärmeleitfähigkeit des Formkörpers um nicht mehr als 25 % erhöht wird. Der in diesem Sinne zulässige Wassergehalt des Formkörpers beträgt 2 bis 15 Gew.-% und liegt im allgemeinen niedriger als die Wasseraufnahmekapazität des zur Herstellung des Formkörpers verwendeten pulverförmigen Stoffes.

In einer bevorzugten Ausführungsform kann die Wassermenge, die aufgenommen werden darf, im Formkörper 5 bis 12 Gew.-%, insbesondere 6 bis 7 Gew.-% betragen.

Die Gasmenge, die in den erfindungsgemäßen Wärmedämmformkörper permeieren darf, entspricht der Menge an Gasen (wie z. B. $N_2$, $O_2$ und $CO_2$), bei der die Wärmeleitfähigkeit um nicht mehr als 25 % erhöht wird.

Der in diesem Sinne zulässige Innendruck in dem Wärmedämmformkörper beträgt maximal 20 mbar bei einem Anfangsdruck von 1 mbar.

Bevorzugt wird ein feinverteiltes SiliciumdioxidMaterial, hergestellt durch Umsetzung von einem Alkaliwasserglas und einer Mineralsäure zur Ausfällung des Siliciumdioxides, das allein oder in Mischung mit anderen Kieselsäuren oder pulver- oder faserförmigen Stoffen verwendet wird.

Derartige Fällungskieselsäuren werden beispielsweise in Ullmann's Enzyklopädie der technischen Chemie, 4. Auflage, Band 21, Seite 462 ff. beschrieben.

Beispielsweise sind zur Herstellung der erfindungsgemäßen Formkörper folgende Fällungskieselsäuren geeignet:

Sipernat® 22 S, Sipernat® 22LS, Sipernat® 50 S, FK 500 LS, FK 500 DS, FK 320 DS, FK 310, FK 700 DS.

Insbesondere werden Fällungskieselsäuren eingesetzt, die sprühgetrocknet und vermahlen wurden.

Derartige Fällungskieselsäuren sind unter der Bezeichnung FK 500 LS, FK 500 DS oder Sipernat® 22 LS im Handel erhältlich.

Weitere geeignete Fällungskieseläuren werden in der US-A-44 95 167 (Degussa) beschrieben.

Es können auch die folgenden Stoffe oder Stoffkombinationen eventuell nach Zumischung von organischen oder anorganischen Fasermaterialien, wie Glas-, Keramik- oder Kunststoffasern, zur mechanischen Stabilisierung der Wärmedämmkörper, eingesetzt werden:

Mischungen aus verschiedenen gefällten Kieselsäuren, wie z. B. Sipernat® 22 LS und FK 500 LS, Sipernat® 22 LS und FK 320 DS, FK 500 LS und FK 320 DS, FK 500 LS und FK 500 DS, FK 500 LS und FK 700 DS, FK 700 DS und FK 310.

Mischungen aus gefällten und pyrogenen Kieselsäuren, wie z. B. Sipernat® 22 LS, FK 320 DS, FK 310, FK 700 DS FK 500 DS, und/oder FK 500 LS mit Aerosil® A 200 und/oder Aerosil® A 300.

Mischungen aus gefällten Kieselsäuren und Kieselsäure- Gelen, wie Sipernat® 22 LS, FK 320 DS, FK 500 DS und/oder FK 500 LS mit Kieselsäuregelen (z. B. die Typen Syloid® 72 und Syloid® 244 der Fa. Grace, Worms).

Mischungen aus gefällten Kieselsäuren und mineralischen Stoffen, wie z. B. Sipernat® 22 LS, FK 320 DS, FK 500 DS und/oder FK 500 LS mit Perliten, Kaolinit, Montmorillonit, Glimmer und/oder Calciumsulfat (Gips).

Mischungen aus gefällten Kieselsäuren und vermahlenen Gläsern oder glasartigen Stoffen, wie z. B. Sipernat® 22 LS, FK 320 DS, FK 500 DS und/oder FK 500 LS mit Glasmehl und/oder sehr feiner Glaswolle.

Mischungen aus gefällten Kieselsäuren und Rußen, wie z. B. Sipernat® 22 LS, FK 320 DS, FK 500 DS und/oder FK 500 LS mit Furnace-Rußen, Flammrußen und/oder Gasrußen.

Mischungen aus gefällten Kieselsäuren und synthetischen oder natürlichen silikatischen Stoffen, wie z. B. Sipernat® 22 LS, FK 320 DS, FK 500 DS und/oder FK 500 LS mit synthetischen oder natürlichen Zeolithen oder Aluminiumsilikaten oder anderen silikatischen Stoffen (Calciumsilikat, Kieselgur, Extrusil®).

Mischungen aus gefällten Kieselsäuren und synthetischen Abfallstoffen, wie z. B. Sipernat® 22 LS, FK 320 DS, FK 500 DS und/oder FK 500 LS mit Flugstäuben, Kraftwerksaschen, Aschen von Verbrennungsanlagen aller Art.

Mischungen aus gefällten Kieselsäuren und nichtmetallischen Elementen, wie z. B. Sipernat® 22 LS, FK 320 DS, FK 500 DS und/oder FK 500 LS mit Schwefel und/oder vermahlener Kohle.

Mischungen aus gefällten Kieselsäuren und Fasern, wie z. B. Sipernat® 22 LS, FK 320 DS, FK 500 DS und/oder FK 500 LS mit anorganischen oder organischen Fasern (Zellwolle oder feine Kunststoff-Fasern aller Art).

Mischungen aus gefällten Kieselsäuren wie z. B. Sipernat® 22 LS, FK 320 DS, FK 500 DS und/oder FK 500 LS und organischen pulverförmigen Superabsorbern wie z. B. Polyacrylaten.

Mischungen aus gefällten Kieselsäuren und pyrogenen Metalloxiden, wie z. B. Sipernat® 22 LS, FK 320 DS, FK 500 DS und/oder FK 500 LS mit pyrogenem Aluminiumoxid, Eisenoxid und/oder Titandioxid.

Pyrogene Kieselsäuren, wie z. B. Aerosil® 200, Aerosil® 300, Aerosil® 380, Aerosil® 450, OX 50, speziell vorbehandelte Aerosile®, Aerosil® MOX-Typen, Aerosil® COK 84.

Mischungen verschiedener pyrogener Kieselsäuren, wie z. B. Aerosil® 200 oder Aerosil® 300 mit speziell vorbehandelten Aerosil-Typen.

Mischungen aus pyrogenen Kieselsäuren und Kieselsäure- Gelen, wie z. B. Aerosil® 200 und/oder Aerosil® 300 mit Kieselsäuregelen (z. B. die Typen Syloid® 72 und Syloid® 244 der Fa. Grace, Worms).

Mischungen aus pyrogenen Kieselsäuren und mineralischen Stoffen, wie z. B. Aerosil® 200 und/oder Aerosil® 300 mit Perliten, Kaolinit, Montmorillonit, Glimmer und/oder Calciumsulfat (Gips).

Mischungen aus pyrogenen Kieselsäuren und vermahlenen Gläsern oder glasartigen Stoffen, wie z. B. Aerosil® 200 und/oder Aerosil® 300 mit Glasmehl und/oder sehr feiner Glaswolle.

Mischungen aus pyrogenen Kieselsäuren, wie z. B. Aerosil® 200 und/oder Aerosil® 300 und Rußen, wie z. B. Furnace-Rußen, Flammrußen und/oder Gasrußen.

Mischungen aus pyrogenen Kieselsäuren und synthetischen oder natürlichen silikatischen Stoffen, wie z. B. Aerosil® 200 und/oder Aerosil® 300 mit synthetischen oder natürlichen Zeolithen oder Aluminiumsilikaten oder anderen silikatischen Stoffen (Calciumsilikat, Kieselgur, Extrusil®).

Mischungen aus pyrogenen Kieselsäuren und synthetischen Abfallstoffen, wie z. B. Aerosil® 200 und/oder Aerosil® 300 mit Flugstäuben, Kraftwerksaschen, Aschen von Verbrennungsanlagen aller Art.

Mischungen aus pyrogenen Kieselsäuren und nichtmetallischen Elementen, wie z. B. Aerosil® 200 und/oder Aerosil® 300 mit Schwefel und/oder vermahlener Kohle.

Mischungen aus pyrogenen Kieselsäuren und Fasern, wie z. B. Aerosil® 200 und/oder Aerosil® 300 mit anorganischen oder organischen Fasern (Zellwolle oder feine Kunststoff Fasern aller Art).

Mischungen aus pyrogenen Kieselsäuren, wie z. B. Aerosil® 200 und/oder Aerosil® 300 und pulverförmigen Superabsorbern, wie z. B. Polyacrylaten.

Mischungen aus pyrogenen Kieselsäuren und pyrogenen Metalloxiden, wie z. B. Aerosil® 200 und/oder Aerosil® 300 mit pyrogenem Aluminiumoxid, Eisenoxid, Titandioxid.

Mischungen aus Rußen und Kieselsäure-Gelen, wie z. B. Ruße oder Rußmischungen mit Kieselsäuregelen (z. B. die Typen Syloid® 72 und Syloid® 244 der Fa. Grace, Worms).

Mischungen aus Rußen und mineralischen Stoffen, wie z. B. Ruße oder Rußmischungen mit Montmorillonit und/oder Calciumsulfat (Gips).

Mischungen aus Rußen und synthetischen oder natürlichen silikatischen Stoffen, wie z. B. Ruße oder Rußmischungen mit synthetischen oder natürlichen Zeolithen oder Aluminiumsilikaten oder anderen silikatischen Stoffen (Calciumsilikat, Kieselgur, Extrusil®).

Mischungen aus Rußen und pulverförmigen Superabsorbern wie z. B. Polyacrylaten.

Mischungen aus Rußen und pyrogenen Metalloxiden, wie z. B. Ruße oder Rußmischungen mit pyrogenem Aluminiumoxid, Eisenoxid, Titandioxid.

Zeolithe (zeolithische Molekularsiebe), wie z. B. Zeolith A, Zeolith X, Zeolith Y, vorbehandelte Zeolithe.

Mischungen aus verschiedenen Zeolithen, wie z. B. Zeolith X mit Zeolith Y.

Mischungen aus Zeolithen und Kieselsäure-Gelen, wie z. B. Zeolithe oder Zeolithmischungen mit Kieselsäuregelen (z. B. die Typen Syloid® 72 und Syloid® 244 der Fa. Grace, Worms)

Mischungen aus Zeolithen und mineralischen Stoffen, wie z. B. Zeolithe oder Zeolithmischungen mit Perliten, Kaolinit, Montmorillonit, Glimmer und/oder Calciumsulfat (Gips).

Mischungen aus Zeolithen und vermahlenen Gläsern oder glasartigen Stoffen, wie z. B. Zeolithe oder Zeolithmischungen mit Glasmehl und/oder sehr feiner Glaswolle.

Mischungen aus Zeolithen und synthetischen oder natürlichen silikatischen Stoffen, wie z. B. Zeolithe oder Zeolithmischungen mit synthetischen Aluminiumsilikaten oder anderen silikatischen Stoffen (Calciumsilikat, Kieselgur, Extrusil®).

Mischungen aus Zeolithen und synthetischen Abfallstoffen, wie z. B. Zeolithe oder Zeolithmischungen mit Flugstäuben, Kraftwerksaschen, Aschen von Verbrennungsanlagen aller Art.

Mischungen aus Zeolithen und nichtmetallischen Elementen, wie z. B. Zeolithe oder Zeolithmischungen mit Schwefel und/oder vermahlener Kohle.

Mischungen aus Zeolithen und Fasern, wie z. B. Zeolithe oder Zeolithmischungen mit anorganischen oder organischen Fasern (Zellwolle oder feine Kunststoff-Fasern aller Art).

Mischungen aus Zeolithen und pulverförmigen Superabsorbern, wie z. B. Polyacrylaten.

Mischungen aus Zeolithen und pyrogenen Metalloxiden, wie z. B. Zeolithe oder Zeolithmischungen mit pyrogenem Aluminiumoxid, Eisenoxid, Titandioxid.

Kieselgele, wie z. B. Syloid® 72 (Fa. Grace, Worms), Syloid® 244 (Fa. Grace, Worms).

Mischungen aus unterschiedlichen Kieselsäuregelen, wie z. B. Syloid® 72 mit Syloid® 244 (Fa. Grace, Worms), unterschiedlich vorbehandelte Kieselsäuregele.

Mischungen aus Kieselgelen und mineralischen Stoffen, wie z. B. Kieselgele oder Kieselgelmischungen mit Perliten, Kaolinit, Montmorillonit, Glimmer und/oder Calciumsulfat (Gips).

Mischungen aus Kieselgelen und vermahlenen Gläsern oder glasartigen Stoffen, wie z. B. Kieselgele oder Kieselgelmischungen mit Glasmehl und/oder sehr feiner Glaswolle.

Mischungen aus Kieselgelen und synthetischen oder natürlichen silikatischen Stoffen, wie z. B. Kieselgele oder Kieselgelmischungen mit synthetischen Aluminiumsilikat oder anderen silikatischen Stoffen (Calciumsilikat, Kieselgur, Extrusil®).

Mischungen aus Kieselgelen und synthetischen Abfallstoffen, wie z. B. Kieselgele oder Kieselgelmischungen mit Flugstäuben, Kraftwerksaschen, Aschen von Verbrennungsanlagen aller Art.

Mischungen aus Kieselgelen und nichtmetallischen Elementen, wie z. B. Kieselgele oder Kieselgelmischungen mit Schwefel und/oder vermahlener Kohle.

Mischungen aus Kieselgelen und Fasern, wie z. B. Kieselgele oder Kieselgelmischungen mit anorganischen oder organischen Fasern (Zellwolle oder feine Kunststoff-Fasern aller Art).

Mischungen aus Kieselgelen und pulverförmigen Superabsorbern, wie z. B. Polyacrylaten.

Mischungen aus Kieselgelen und pyrogenen Metalloxiden, wie z. B. Kieselgele oder Kieselgelmischungen mit pyrogenem Aluminiumoxid, Eisenoxid, Titandioxid.

Mischungen aus unterschiedlichen Aluminiumsilikaten, wie z. B. verschiedene Aluminiumsilikat-Typen, unterschiedlich vorbehandelte Aluminiumsilikate.

Mischungen aus Aluminiumsilikaten und mineralischen Stoffen, wie z. B. Aluminiumsilikate oder Aluminiumsilikatmischungen mit Perliten, Kaolinit, Montmorillonit, Glimmer und/oder Calciumsulfat (Gips).

Mischungen aus Aluminiumsilikaten und vermahlenen Gläsern oder glasartigen Stoffen, wie z. B. Aluminiumsilikate oder Aluminiumsilikatmischungen mit Glasmehl und/oder sehr feiner Glaswolle.

Mischungen aus Aluminiumsilikaten und synthetischen oder natürlichen silikatischen Stoffen, wie z. B. Aluminiumsilikate oder Aluminiumsilikatmischungen mit anderen silikatischen Stoffen (Calciumsilikat, Kieselgur, Extrusil®).

Mischungen aus Aluminiumsilikaten und synthetischen Abfallstoffen, wie z. B. Aluminiumsilikate oder Aluminiumsilikatmischungen mit Flugstäuben, Kraftwerksaschen, Aschen von Verbrennungsanlagen aller Art.

Mischungen aus Aluminiumsilikaten und nichtmetallischen Elementen, wie z. B. Aluminiumsilikate oder Aluminiumsilikatmischungen mit Schwefel und/oder vermahlener Kohle.

Mischungen aus Aluminiumsilikaten und Fasern, wie z. B. Aluminiumsilikate oder Aluminiumsilikatmischungen mit anorganischen oder organischen Fasern (Zellwolle oder feine Kunststoff-Fasern aller Art).

Mischungen aus Aluminiumsilikaten und pulverförmigen Superabsorbern, wie z. B. Polyacrylaten.

Mischungen aus Aluminiumsilikaten und pyrogenen Metalloxiden, wie z. B. Aluminiumsilikate oder Aluminiumsilikatmischungen mit pyrogenem Aluminiumoxid, Eisenoxid, Titandioxid.

Metalloxide (pyrogen oder gefällt), wie z. B. Aluminiumoxid, Eisenoxide, Titandioxid, Zirkondioxid.

Mischungen aus unterschiedlichen Metalloxiden (pyrogen oder gefällt), wie z. B. Aluminiumoxid mit verschiedenen Eisenoxiden, Aluminiumoxid mit Titandioxid, Titandioxid mit verschiedenen Eisenoxiden.

Mischungen aus Metalloxiden (pyrogen oder gefällt) und mineralischen Stoffen, wie z. B. Aluminiumoxid, verschiedene Eisenoxide, Titandioxid und/oder Zirkondioxid mit Perliten, Kaolinit, Montmorillonit, Glimmer und/oder Calciumsulfat (Gips).

Mischungen aus Metalloxiden (pyrogen oder gefällt) und vermahlenen Gläsern oder glasartigen Stoffen, wie z. B. Aluminiumoxid, verschiedene Eisenoxide, Titandioxid und/oder Zirkondioxid mit Glasmehl und/oder sehr feiner Glaswolle.

Mischungen aus Metalloxiden (pyrogen oder gefällt) und synthetischen oder natürlichen silikatischen Stoffen, wie z. B. Aluminiumoxid, verschiedene Eisenoxide, Titandioxid und/oder Zirkondioxid mit silikatischen Stoffen (Calciumsilikat, Kieselgur, Extrusil®).

Mischungen aus Metalloxiden (pyrogen oder gefällt) und synthetischen Abfallstoffen, wie z. B. Aluminiumoxid, verschiedene Eisenoxide, Titandioxid und/oder Zirkondioxid mit Flugstäuben, Kraftwerksaschen, Aschen von Verbrennungsanlagen aller Art.

Mischungen aus Metalloxiden (pyrogen oder gefällt) und nichtmetallischen Elementen, wie z. B. Aluminiumoxid, verschiedene Eisenoxide, Titandioxid und/oder Zirkondioxid mit Schwefel und/oder vermahlener Kohle.

Mischungen aus Metalloxiden (pyrogen oder gefällt) und Fasern, wie z. B. Aluminiumoxide, verschiedene Eisenoxide, Titandioxid und/oder Zirkondioxid mit anorganischen oder organischen Fasern (Zellwolle oder feine Kunststoff-Fasern aller Art).

Mischungen aus Metalloxiden (pyrogen oder gefällt) wie z. B. Aluminiumoxide, verschiedene Eisenoxide, Titanoxid und/oder Zirkonoxid und Superabsorbern wie z. B. Polyacrylaten.

Als gefällte Kieselsäuren können weiterhin eingesetzt werden:

HISIL® T 600, HISIL® T 690 der Fa. PPG

Tixosil® 333 der Fa. Rhône-Poulenc

Hoesch® SM 614 der Fa. AKZO

Zeothix® 265 und Zeothix 177 der Fa. Huber

Die erfindungsgemäß einsetzbaren Umhüllungen können eine Wasserdampfdurchlässigkeit von 0,02 bis 0,1 g/($m^2$.d) bei 23 °C und 85 % relativer Feuchte aufweisen. Die Durchlässigkeiten gegenüber anderen Gasen (z. B. $O_2$, $N_2$, $CO_2$) dürfen in der Summe nicht größer als 0,05 bis 0,5 $cm^3$/($m^2$.d.bar) bei 23 °C sein. Die Gasdurchlässigkeiten sind so zu bemessen, daß der Innendruck im Wärmedämmformkörper am Ende der Lebensdauer 20 mbar nicht überschreitet.

Da die Gasdurchlässigkeit gegenüber der Wasserdampfdurchlässigkeit um etwa den Faktor 1000 niedriger liegt, ist die maximale Lebensdauer des Wärmedämmformkörpers erreicht, wenn eine weitere Wasserdampfaufnahme durch den Füllstoff nicht mehr möglich ist oder bei einer weiteren Wasserdampfaufnahme die Wärmeleitfähigkeit stark ansteigt.

Als besonders wirksam haben sich Folien erwiesen, die mehrschichtig derart aufgebaut sind, daß eine Gasbarriere auf der Ober- und Unterseite mit einer hochwirksamen Wasserdampfsperre über eine Kleberschicht versehen ist.

Eine derartige Umhüllung kann eine metallschichtfreie, sperrschichthaltige Mehrschichtfolie sein, die im wesentlichen folgende Schichten aufweist:

A)      eine Schutzlackschicht aus PV DC, die gegebenenfalls eine Polyvinylalkoholschicht enthalten kann.

B1)      gegebenenfalls eine Verbindungs- oder Klebeschicht,

C1)      eine Polyolefinschicht,

B2) eine Verbindungs- oder Klebeschicht,

D) eine Ethylenvinylalkoholcopolymerschicht, die gegebenenfalls wenigstens einseitig mit einer Polyamidschicht E durch Koextrusion versehen ist

B3) gegebenenfalls eine Verbindungs- oder Klebeschicht,

C2) eine Polyolefinschicht,

Der Schuztlack gemäß A kann aus Polyvinylidenchlorid (PVDC) bestehen. Die Polyvinylalkoholschicht A) besteht vorzugsweise aus einem Ethylen/Vinylacetat-Copolymerisat, das aus 40 bis 85, insbesondere 60 bis 75 Mol-% Vinylacetateinheiten besteht, die zu mindestens 90 %, vorzugsweise zu mehr als 95 Mol-% verseift sind. Eine ganz besonders bevorzugte Polyvinylalkoholschicht besteht aus mehr als 95 Mol-% verseiften Polyvinylacetateinheiten. Die daraus hergestellte Folie wird biaxial gereckt.

In einer bevorzugten Ausführungsform ist die Polyvinylalkoholschicht A) ein- oder insbesondere beidseitig mit Polyvinylidenchlorid (PVDC) umgeben, insbesondere lackiert.

Die gegebenenfalls mit PVDC lackierte Polyvinylalkoholschicht A) ist in einer bevorzugten Ausführungsform mit den folgenden Schichten über eine Verbindungs- oder Klebeschicht B1) verbunden. Für eine Klebeschicht wird insbesondere ein handelsüblicher Zweikomponentenpolyurethankleber verwendet.

Bei der Schicht B1) kann es sich aber auch um eine Verbindungsschicht aus einem Polyolefin handeln.

Die Olefinschicht C1) besteht im wesentlichen aus einem Olefin. Besonders bevorzugte Polyolefine sind: Polyethylenhomopolymere und Polyethylencopolymere,

EBA (= Ethylenbutylacrylat),

EAA (= Ethylenacrylsäure),

EEA (= Ethylenethylacetat) und

Ionomerharze, insbesondere aus einem Ethylen-Methacrylsäure-Copolymeren (= EMA), dessen Kettenmoleküle über Ionenbindung, insbesondere über Zinkionen, vernetzt sind.

Die Schicht B2) besteht im wesentlichen aus den unter B1) angegebenen Komponenten.

Als Gassperrschicht D) wird insbesondere eine Ethylenvinylalkoholcopolymerschicht genommen mit einem Gehalt von Vinylalkohol von vorzugsweise 40 Mol-% bis 90 Mol-%, bezogen auf das Ethylenvinylalkoholcopolymere.

In einer besonders bevorzugten Ausführungsform hat die Ethylenvinylalkoholcopolymerschicht D) einen Vinylalkoholgehalt zwischen 65 und 75 Mol-%, bezogen auf das Ethylenvinylalkoholcopolymer und ein- oder insbesondere beidseitig umgeben von einer Polyamidschicht E), beispielsweise einem Polyamid-6. In einer ganz bevorzugten Ausführungsform wird ein coextrudierter Verbund aus den Schichten E1), D), E2) in die erfindungsgemäß verwendete Folie eingebracht.

Soweit eine Verbindungs- oder Klebeschicht B3) enthalten ist, kann sie eine der unter B1) Komponenten aufweisen.

Die Polyolefinschicht C2) besteht im wesentlichen aus einer der unter Schicht C1) angegebenen Komponenten.

Besonders bevorzugt wird als Polyethylen ein LLDPE (= Linear Low Density Polyethylen). Die einzelnen Schichten weisen vorzugsweise folgende Dicken in μm auf:

Schicht A) PVDC : 12 μm oder Polyvinylalkohol gegebenenfalls PVDC lackiert: 10 bis 20 μm,

B1): 0,1 bis 10 μm, soweit ein Kleber verwendet wird,

C1): 5 bis 500 μm,

B2): 0,2 bis 10 μm, soweit eine Klebeschicht verwendet und 5 bis 500 μm, soweit eine Verbindungsschicht, z.B. Polyolefin verwendet wird,

Schicht D): 1 bis 50 μm,

Schichten E): jeweils 5 bis 100 μm,

Schicht B3): 0,2 bis 10 μm,

Schicht C2): 5 bis 500 μm

In einer bevorzugten Ausführungsform sind wenigstens einzelne Schichten des Folienverbundes gereckt. Insbesondere wird es bevorzugt, daß die Schicht A) der Umhüllung biaxial gereckt ist. Dies gilt nur soweit es sich nicht nur um den Schutzlack alleine handelt.

In einer besonderen Ausführung der Erfindung können die Schichten B1 und B3 der Umhüllung im Wesentlichen aus einem Zweikomponentenpolyurethankleber bestehen.

Die Verbundfolie kann in den einzelnen Schichten mit üblichen Additiven und Hilfsmitteln wie z. B. Gleitmitteln, Antiblockmitteln und Antistatika in üblichen Mengen ausgerüstet werden. Bevorzugte Zusätze sind gesättigte oder ungesättigte Fettsäureamide.

Die erfindungsgemäß verwendbare Verbundfolie weist vorzugsweise eine Gesamtdicke von 100 bis 1500 μm, insbesondere von 150 bis 500 μm auf. Eine ganz besonders bevorzugte erfindungsgemäß verwendbare Verbundfolie zeichnet sich durch folgende Eigenschaften aus:

Durchlässigkeit gegen Wasserdampf
(bestimmt gemäß DIN 53 122): <0,1 g/m$^2$.Tag
Durchlässigkeit gegen Sauerstoff
(gemäß DIN 53 380): <0,1 cm$^3$/m$^2$.d.bar

Die Dichtigkeit der Folie gegen Wasserdampf und Gas ist unerwartet hoch, ein Vakuum in einem Beutel aus der erfindungsgemäßen verwendeten Folie hält sich unerwartet lange.

Beispiel 1

Eine erfindungsgemäß verwendbare Folie mit dem im folgenden angegebenen Schichtaufbau wurde hergestellt:

A: beidseitig PVDC lackierte Polyvinylalkoholschicht, Dicke 15 μm
B1: Klebeschicht aus einem Zweikomponentenpolyurethankleber, Dicke 2 μm
C1: Polyolefinschicht aus Polyethylen, Dicke 50 μm
B2: Verbindungsschicht aus Zweikomponentenpolyurethankleber, Dicke 2 μm
D: beidseitig mit Polyamid verstärkte Ethylenvinylalkoholcopolymerschicht D (Dicke der Polyamidschichten jeweils 37,5 μm, Dicke der Ethylenvinylalkoholcopolymerschicht 5 μm)
B3: Polyrethanklebstoffschicht, Dicke 2 μm
C2: Polyolefinschicht aus Linear Low Density Polyethylen, Dicke 100 μm

Die einzelnen Schichtbestandteile sind im folgenden näher angegeben:

A: Die Polyvinylalkoholschicht ist biaxial gereckt.
B1, B2, B3 : Handelsübliche Zweikomponent-Kaschier-Kleber.
C1, C2; Blasfolien-Polyethylen aus LLDPE
Dichte: 0,921,
Schmnelzindex: 0,8 g/10 min.
D, E: Coextrudierte Verbundfolie aus Polyamid-6 und Ethylenvinylalkohol-Copolymer.

Beispiel 2

Eine erfindungsgemäße verwendbare Folie mit dem im folgenden angegebenen Schichtaufbau wurde hergestellt:

A: beidseitig PVDC lackierte Polyvinylalkoholschicht, Dicke 15 μm
B1: Klebeschicht aus einem Zweikomponentenpolyurethankleber, Dicke 2 μm
C1: Polyolefinschicht aus Polyethylen,
Dicke 75 μm
B2: Verbindungsschicht aus Polyethylen niedriger Dichte, Dicke 50 μm
D: beidseitig mit Polyamid verstärkte Ethylenvinylalkoholschicht D (Dicke der Polyamidschichten jeweils 37,5 μm; Dicke der Ethylenvinylalkoholschicht 5 μm)
B3: Polyurethanklebstoffschicht, Dicke 2 μm
C2: Polyolefinschicht aus Linear Low Density Polyethylen, Dicke 100 μm

Die einzelnen Schichtbestandteile entsprechen denen des Beispiels 1, wobei aber die Schicht B2 aus einem Polyethylen niedriger Dichte für Extrusionskaschierung besteht.

Die Folie wurde in an sich bekannter Weise durch Klebkaschierung und Coextrusion hergestellt.

Die Folie wurde nach einer Lagerung (Temperatur 23°C, 50 % relativer Feuchte) folgenden Untersuchungen unterzogen und zeigte die angegebenen Ergebnisse:

1) Prüfung der Durchlässigkeit für die Gase:
Sauerstoff,
Stickstoff,
Kohlendioxid,
Prüfatmosphäre: 23 °C; 0 % relativer Feuchte.
Ergebnisse: Für alle geprüften Gase ist die Durchlässigkeit < 0,1 cm$^3$/m$^2$.Tag.bar und liegt unterhalb der Nachweisgrenze der üblichen Meßmethoden.

2) Prüfung der Durchlässigkeit für Wasserdampf:
Prüfatmosphäre: 23 °C; 85 % relativer Feuchte,
Ergebnis: Durchlässigkeit < 0,1 g/m$^2$.d.

Beispiel 3 (Vergleichsbeispiel)

Bevorzugterweise kann die erfindungsgemäß einsetzbare metallfreie Umhüllung eine Mehrschichtenfolie sein, die folgendermaßen aufgebaut sein kann:

LLDPE    Linear Low Density Polyethylen (Siegelschicht)
HV    Haftvermittler (Klebeschicht)
EVOH    Ethylen-Vinylalkohol-Copolymerisat (Klebeschicht)
HV    Haftvermittler (Klebeschicht)
LLDPE    Linear Low Density Polyethylen
PVDC    Polyvinylidenchlorid

Besonders geeignet ist folgender Schichtanaufbau:

LLDPE    Linear Low Density Polyethylen, Dicke 65 $\mu$m spezifisches Gewicht 0,92 g/cm$^3$
HV    Haftvermittler, Dicke 5 $\mu$m, spezifisches Gewicht 0,92 g/cm$^3$
EVOH    Ethylen-Vinylakohol-Copolymerisat Dicke 10 $\mu$m, spezifisches Gewicht 1,17 g/cm$^3$
HV    Haftvermittler, Dicke 5 $\mu$m, spezifisches Gewicht 0,92 g/cm$^3$
LLDPE    Linear Low Density Polyethylen, Dicke 65 $\mu$m, spezifisches Gewicht 0,92 g/cm$^3$
PVDC    Polyvinylidenchlorid, Dicke 12 $\mu$m, spezifisches Gewicht 1,35 g/cm$^3$

Beispiel 4

Eine andere besonders bevorzugte Mehrschichtenfolie hat folgende Zusammensetzung:

LLDPE    Linear Low Density Polyethylen (Siegelschicht)
HV    Haftvermittler (Klebeschicht)
PA/EVOH/PA    beidseitig mit Polyamid verstärktes Ethylen-Vinylalkohol-Copolymerisat
HV oder PE    Haftvermittler (Klebeschicht) oder Verbindungsschicht aus Polyethylen niedriger Dichte (zur Kaschierung)
LLDPE    Linear Low Density Polyethylen
HV    Haftvermittler (Klebeschicht)
PVDC/PVOH/PVDC beidseitig mit Polyvinylidenchlorid lackierter Polyvinylalkohol

Als besonders geeignet hat sich der folgende Schichtenaufbau herausgestellt:

LLDPE    Linear Low Density Polyethylen, Dicke 100 $\mu$m, spezifisches Gewicht 0,921 g/cm$^3$, Schmelzindex 0,89/10 min.
HV    Klebeschicht aus Zweikomponenten-Polyurethan-Kaschierkleber Dicke 2 $\mu$m
PA/EVOH/PA    Coextrudierte Verbundfolie aus zwei Polyamid-6-Schichten (Dicken jeweils 37,5 $\mu$m und dazwischen Ethylen-Vinylalkohol-Copolymerisat (Dicke 5 $\mu$m)
HV oder PE    Klebeschicht aus Zweikomponenten-Polyurethan-Kaschierkleber, Dicke 2 $\mu$m
    oder:
    Verbindungschicht aus Polyethylen niedriger Dichte, Dicke 50 $\mu$m
LLDPE    Linear Low Density Polyethylen, Dicke 50 $\mu$m oder 75 $\mu$m, spezifisches Gewicht 0,921 g/cm$^3$, Schmelzindex 0,8 g/10 min.
HV    Klebeschicht aus Zweikomponenten-Polyurethan-Kaschierkleber, Dicke 2 $\mu$m
PVDC/PVOH/PVDC beidseitg mit Polyvinylidenchlorid lackierter, biaxial gereckter Polyvinylalkohol, Dicke 15 $\mu$m

Geeignet für die erfindungsgemäßen Formkörper sind feinverteilte, pulverförmige bzw. faserförmige Stoffe, die eine Wasseraufnahmekapazität von 4 bis 50 Gew.-% (bei 23 °C und 85 % relativer Feuchte) haben. Die Wassermenge, die die feinverteilten Stoffe bei der Verwendung im erfindungsgemäßen Formkörper aufnehmen dürfen, ist in der Regel kleiner als deren Wasseraufnahmekapazität. Der Grenzwert für die zulässige Wasseraufnahme im Wärmedämmkörper entspricht der Menge an Wasser, bei der die Wärmeleitfähigkeit des Formkörpers um nicht mehr als 25 % gegenüber einem trockenen Formkörper zugenommen hat. Zur Herstellung eines trockenen Formkörpers wird ein feinverteilter Stoff verwendet, der gemäß DIN 55 921 getrocknet wurde. Bevorzugt liegt die entsprechende Wassermenge, die ein Wärmedämmkörper aufnehmen darf, zwischen 2 und 15 Gew.-%, bezogen auf den trockenen Füllstoff.

Die erfindungsgemäßen Wärmedämmkörper weisen gegenüber den Wärmedämmkörpern gemäß Stand der Technik den Vorteil auf, daß durch die Verwendung metallfreier Umhüllungsfolien die Wärmeleitfähigkeit im Kantenbereich der Wärmedämmkörper so niedrig ist, daß die sehr gute Gesamt-Wärmeleitfähigkeit der Formkörper von etwa 8 mW/(m.K) (gemessen nach dem absoluten Einplattenverfahren mit Schutzring an Wärmedämmstoffen, hergestellt aus der Fällungskieselsäure FK 500 LS) nur unwesentlich beeinträchtigt wird.

Somit lassen sich aus den erfindungsgemäßen Wärmedämmkörpern beispielsweise Behältnisse anfertigen, die für die Lagerung und/oder den Transport von temperaturempfindlichen Gütern geeignet sind (Beispiele hierfür sind Einweg-Transportbehälter für temperaturempfindliche Medikamente oder Impfstoffe sowie Kühl- und Gefrierschränke).

In der folgenden Tabelle sind Beispiele für die Wärmeleitfähigkeiten von Wärmedämmkörpern aufgeführt, die mit metallfreier Umhüllungsfolie gefertigt wurden. Die Wärmeleitfähigkeiten wurden jeweils nach dem absoluten Einplattenverfahren mit Schutzring und nach einem Verfahren ohne Schutzringtechnik gemessen. Im Verfahren ohne Schutzringtechnik werden Wärmeströme, die durch die Umhüllungsfolie von einer Seite eines plattenförmigen Wärmedämmkörpers zur anderen fließen, nicht kompensiert und man erhält einen Wert für die Gesamt-Wärmeleitfähigkeit des Wärmedämmkörpers (abhängig von Geometrie und Größe des Formkörpers).

Füllgut:  FK 500 LS

Abmessungen:  250 mm x 250 mm x 20 mm

Wärmeleitfähigkeiten verschiedener Wärmedämmkörper als Funktion der Meßmethode

| | Meßmethode zur Bestimmung der Wärmeleitfähigkeit | |
|---|---|---|
| Wärmedämmkörper-Art | gemäß absoluten Einplattenverfahren mit Schutzring nach Kohlrausch (Kalte Seite - 20 °C; warme Seite + 20 °C) | gemäß Einplattenverfahren ohne Schutzring |
| Wärmedämmkörper mit metallhaltiger Umhüllung (einkaschierte Al-Folie mit einer Dicke von 12 μm) gemäß Stand der Technik | 8 mW/m/K | etwa 25 mW/m/K |
| Wärmedämmkörper mit metallfreier Umhüllung gemäß Erfindung | 8 mW/m/K | etwa 9 mW/m/K |

Die erfindungsgemäß eingesetzten pulverförmigen bzw. faserförmigen Stoffe sind beispielsweise durch die folgenden physikalisch-chemischen Kenndaten gemäß Tabellen 1, 2, 3 und 4 gekennzeichnet:

Tabelle 1

| | | AEROSIL 200 ②| AEROSIL 300 ③| AEROSIL 380 ②| AEROSIL OX 50 ②| AEROSIL COK 84 ② |
|---|---|---|---|---|---|---|
| Oberfläche nach BET | $m^2/g$ | 200±25 | 300±30 | 300±30 | 50±15 | 170±30 |
| Mittlere Größe der Primärteilchen | Nanometer | 12 | 7 | 7 | 40 | - |
| Stampfdichte 1) | g/l | ca. 50 | ca. 50 | ca. 50 | ca. 130 | ca. 50 |
| Trocknungsverlust 2) (2h bei 105 °C) bei Verlassen des Werkes | % | < 1,5 | < 1,5 | < 1,5 | < 1,5 | < 1,5 |
| Glühverlust 2) 7) (2h bei 1000°C) | % | < 1 | < 2 | < 2,5 | < 1 | < 1 |
| pH-Wert 3) (in 4%iger wäßriger Dispersion) | | 3,6-4,3 | 3,6-4,3 | 3,6-4,3 | 3,8-4,5 | 3,6-4,3 |
| $SiO_2$ 5) | % | > 99,8 | > 99,8 | > 99,8 | > 99,8 | 82-86 |
| $Al_2O_3$ 5) | % | < 0,05 | < 0,05 | < 0,05 | < 0,08 | 14-18 |
| $Fe_2O_3$ 5) | % | < 0,003 | < 0,003 | < 0,003 | < 0,01 | < 0,1 |
| $TiO_2$ 5) | % | < 0,03 | < 0,03 | < 0,03 | < 0,03 | < 0,03 |
| HCl 5) 10) | % | < 0,025 | < 0,025 | < 0,025 | < 0,01 | < 0,1 |
| Siebrückstand 4) nach Mocker (45 μm) | % | < 0,05 | < 0,05 | < 0,05 | < 0,1 | < 0,1 |

EP 0 446 486 B1

1) nach DIN 52 194

2) nach DIN 55 921

3) nach DIN 53 200

4) nach DIN 53 580

5) bezogen auf die 2 Stunden bei 1000 °C geglühte Substanz

7) bezogen auf die 2 Stunden bei 105 °C getrocknete Substanz

10) HCl-Gehalt ist Bestandteil des Glühverlustes

Tabelle 2

| | | EXTRUSIL® |
|---|---|---|
| Oberfläche nach BET  1) | $m^2/g$ | 35 |
| Mittlere Größe der Agglomerate | $\mu m$ | 5    8) |
| Stampfdichte  2) | g/l | 300 |
| Trocknungsverlust (2h bei 105 °C) bei Verlassen des Lieferwerkes  3) | % | 6 |
| Glühverlust (2h bei 1000°C) 4) 10) | % | 7 |
| pH-Wert (in 5%iger wäßriger Dispersion)  5) | | 10 |
| DBP-Absorption  6)   10) | g/100 g | 160 |
| $SiO_2$  11) | % | 91 |
| $Al_2O_3$  11) | % | 0,2 |
| CaO  11) | % | 6 |
| $Na_2O$  11) | % | 2 |
| $Fe_2O_3$  11) | % | 0,03 |
| $SO_3$  11) | % | – |
| Cl-  11) | % | 0,8 |
| Siebrückstand (nach Mocker, 45 $\mu$m) 7) | % | 0,2 |

1) nach DIN 66 131

2) nach DIN ISO 787/XI, JIS K 5101/78 (nicht gesiebt)

3) nach DIN ISO 787/II, ASTM D 280, JIS K 5101/21

4) nach DIN 55 921, ASTM D 1208, JIS K 5101/23

5) nach DIN ISO 787/IX, ASTM D 1208, JIS K 5101/24

6) nach DIN 53 601, ASTM D 2414

7) nach DIN ISO 787/XVIII, JIS K 5101/20

8) Coulter Counter, 100 μm Kapillare

10) bezogen auf die 2 Stunden bei 105 °C getrocknete Substanz

11) bezogen auf die 2 Stunden bei 1000°C geglühte Substanz

Tabelle 3

| | | FK 320 DS | FK 500 LS | SIPERNAT 22 LS |
|---|---|---|---|---|
| Oberfläche nach BET 1) | $m^2/g$ | 170 | 450 | 190 |
| Mittlere Größe der Agglomerate | μm | 4   9) | 3,5   9) | 4,5   9) |
| Stampfdichte 2) | g/l | 80 | 80 | 80 |
| Trocknungsverlust (2h bei 105°C) bei Verlassen des Lieferwerkes 3) | % | 6 | 3 | 6 |
| Glühverlust (2h bei 1000 °C) 4) 10) | % | 5 | 5 | 5 |
| pH-Wert (in 5 %iger wäßriger Dispersion) 5) | | 6,3 | 6,5 | 6,3 |
| DBP-Absorption 6) 10) | g/100 g | 230 | 330 | 270 |
| $SiO_2$ 11) | % | 98 | 98,5 | 98 |
| $Na_2O$ 11) | % | 1 | 0,6 | 1 |
| $Fe_2O_3$ 11) | % | 0,03 | 0,03 | 0,03 |
| $SO_3$ 11) | % | 0,8 | 0,7 | 0,8 |
| Siebrückstand (nach Mocker, 45 μm) 7) | % | 0,01 | 0,02 | 0,1 |

1) nach DIN 66 131

2) nach DIN ISO 787/XI, JIS K 5101/18 (nicht gesiebt)

3) nach DIN ISO 787/II, ASTM D 280, JIS K 5101/21

4) nach DIN 55 921, ASTM D 1208, JIS K 5101/23

5) nach DIN ISO 787/IX, ASTM D 1208, JIS K 5101/24

6) nach DIN 53 601, ASTM D 2414

7) nach DIN ISO 787/XVIII, JIS K 5101/20

9) Coulter Counter, 50 μm Kapillare

10) bezogen auf die 2 Stunden bei 105 °C getrocknete Substanz

11) bezogen auf die 2 Stunden bei 1000°C geglühte Substanz

Tabelle 4

| Hersteller | | Hoesch | Huber | | PPG | | Rhone-Poulenc | Grace | |
|---|---|---|---|---|---|---|---|---|---|
| Typ | | SM 614 | Zeothix® 265 | Zeothix® 177 | HiSil® T 600 | HiSil® T 690 | Tixosil® 333 | Syloid® 72 | Syloid® 244 |
| $SiO_2$-Gehalt 1) | (%) | 87 | - | - | - | - | 97 | 99 | 99,5 |
| Trockenverlust 2) | (%) | 6 | 7 | - | 1-2 | 10 | - | 1 | 4 |
| Glühverlust 2) | (%) | 9 | - | - | - | - | ± 11 | 5 | 7 |
| pH-Wert 3) | | 6 | 7 | 7 | 3.5 | 7 | 6,8 | 6 | 6 |
| BET-Oberfläche | (m²/g) | - | 260 | 175 | 200 | 150 | 300 | - | - |
| mittlerre Teilchengröße 4) | (μm) | 8 | 1,7 | 1,5 | 0,015 | 0,021 | 2,3 | 4 | 2 |
| Öl-Absorption | (ml/100g) | - | 220 | 235 | - | - | 370 | - | - |
| Naßsiebrückstand 5) | (%) | - | - | - | - | - | - | 0,02 | 0,02 |
| Porenvolumen | (ml/g) | - | - | - | - | - | - | 1,2 | 1,6 |
| Typ | | FK 6) | FK 6) | FK 6) | FK 6) | FK 6) | FK 6) | KG 7) | KG 7) |

1) bezogen auf bei 1000 °C geglühte Substanz
2) DIN 55 921
3) DIN 53 200
4) Coulter Counter 100 μm Kapillare
5) nach Mocker
6) Fällungskieselsäure
7) Kieselgel

EP 0 446 486 B1

Im folgenden werden Beispiele dafür gegeben, welchen Einfluß der Wassergehalt eines Wärmedämmkörpers auf die Wärmeleitfähigkeit hat. Die Messungen erfolgen nach dem absoluten Einplattenverfahren mit Schutzringtechnik nach Kohlrausch (Kalte Seite: - 20 °C; warme Seite + 20 °C).

1. FK 500 LS

Einfluß des Feuchtegehaltes auf die Wärmeleitfähigkeit
Preßdichte: 200 g/l
Feuchtegehalt eingestellt mit Mikrowelle.

| Feuchtegehalt* | Wärmeleitfähigkeit | Innendruck** |
|---|---|---|
| (%) | (mW/m/K) | (mbar) |
| 0,3 | 8,8 | < 4 |
| 0,5 | 8,9 | < 4 |
| 1,3 | 9,4 | < 4 |
| 2,3 | 9,1 | < 4 |
| 4,1 | 9,4 | < 4 |
| 7,0 | 11,0 | ca. 10 |
| 9,6 | 14,0 | ca. 20 |

\* Feuchtegehalt in Gew.-% bezogen auf die Trockensubstanz

\*\* Innendruck (Druck im Wärmedämmkörper) jeweils gemessen nach der Wärmeleitfähigkeitsmessung

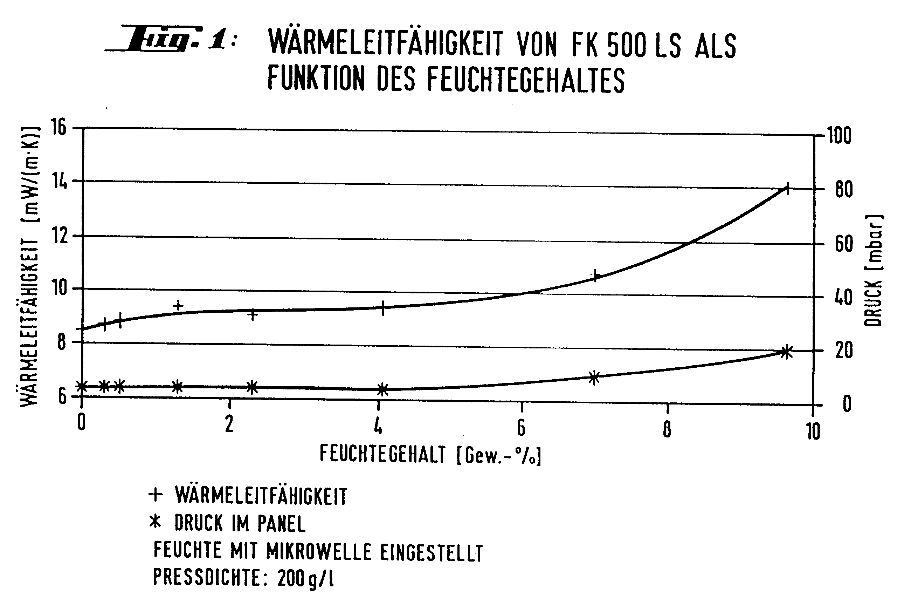

Diese Ergebnisse sind in der Figur 1 graphisch dargestellt.

2. FK 500 LS

Einfluß des Feuchtegehaltes auf die Wärmeleitfähigkeit
Preßdichte: 200 g/l
Einstellung des Feuchtegehalts durch Trocknen im Umlufttrockenschrank (105 - 110 °C)

| Feuchtegehalt[*]<br>(%) | Wärmeleitfähigkeit<br>(mW/m/K) | Innendruck[**]<br>(mbar) |
|---|---|---|
| 0 | 9,5 | < 4 |
| 0,2 | 10,0 | < 4 |
| 0,5 | 10,5 | < 4 |
| 0,8 | 9,7 | < 4 |
| 1,0 | 10,0 | < 4 |
| 1,1 | 10,3 | < 4 |
| 2,1 | 9,7 | < 4 |
| 3,6 | 10,7 | < 4 |
| 4,0 | 9,8 | < 4 |
| 5,1 | 10,6 | < 4 |
| 7,0 | 11,0 | ca. 10 |
| 9,6 | 14,0 | ca. 20 |

[*]  Feuchtegehalt in Gew.-% bezogen auf die
Trockensubstanz

[**]  Innendruck (Druck im Wärmedämmkörper) jeweils
gemessen nach der Wärmeleitfähigkeitsmessung

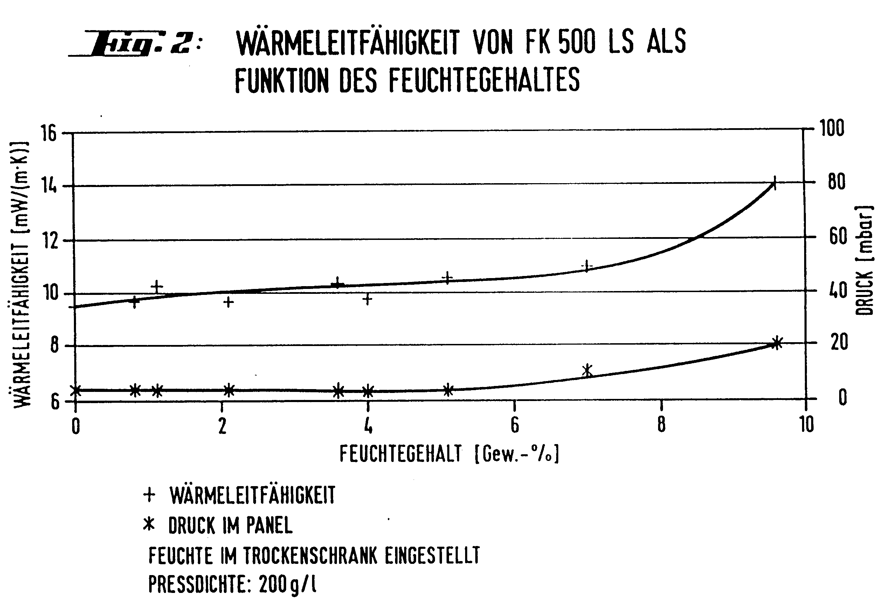

Diese Ergebnisse sind in der Figur 2 graphisch dargestellt.
3. FK 320 DS
Einfluß des Feuchtegehaltes auf die Wärmeleitfähigkeit
Preßdichte: 210 g/l
Einstellung des Feuchtegehalts durch Trocknen im Umlufttrockenschrank (105 - 110 °C)

| Feuchtegehalt[*]<br>(%) | Wärmeleitfähigkeit<br>(mW/m/K) | Innendruck[**]<br>(mbar) |
|---|---|---|
| 0 | 8,6 | < 4 |
| 0,6 | 9,1 | < 4 |
| 1,5 | 9,2 | < 4 |
| 2,5 | 9,5 | < 4 |
| 3,4 | 9,3 | < 4 |
| 4,5 | 9,7 | ca. 8 |
| 5,5 | 9,7 | ca. 10 |
| 7,4 | 10,8 | ca. 15 |

[*]  Feuchtegehalt in Gew.-% bezogen auf die Trockensubstanz

[**]  Innendruck (Druck im Wärmedämmkörper) jeweils gemessen nach der Wärmeleitfähigkeitsmessung

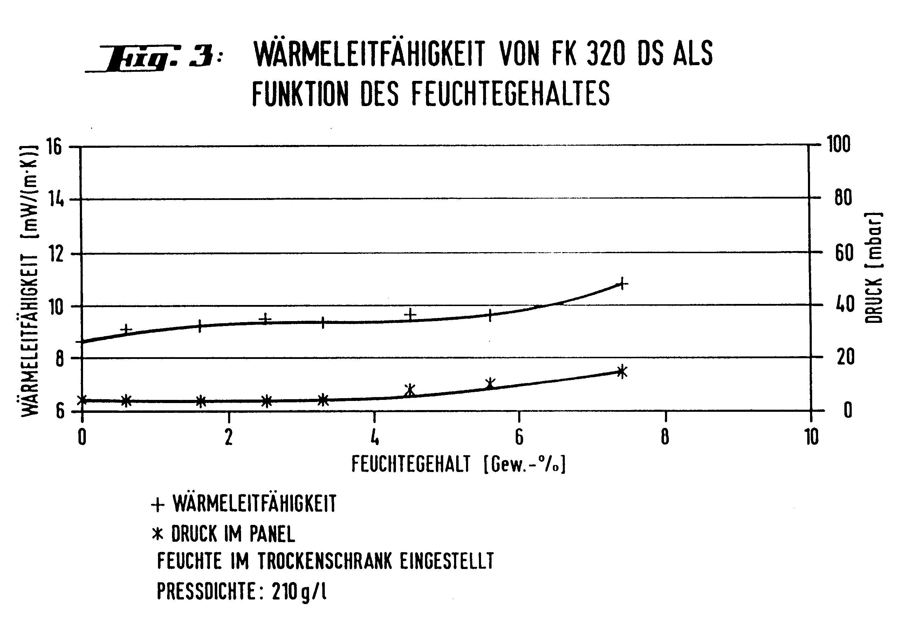

Diese Ergebnisse sind in der Figur 3 graphisch dargestellt.

Da infolge eindiffundierender Gase der Innendruck im Wärmedämm-Formkörper allmählich ansteigt (die Summe der Gasdurchlässigkeiten der Hüllfolie liegt im Bereich zwischen 0,05 bis 0,5 $cm^3/(m^2 \cdot d \cdot bar)$) werden Beispiele gegeben, welchen Einfluß der Druck im Formkörper auf die Wärmeleitfähigkeit des Dämmkörpers hat.

1. FK 500 LS

Einfluß des Druckes auf die Wärmeleitfähigkeit Preßdichte: 200 g/l

| Innendruck<br>(mbar) | Wärmeleitfähigkeit<br>(mW/(m•K)) |
|---|---|
| 2 | 8,1 |
| 5 | 8,2 |
| 10 | 9,2 |
| 20 | 10,1 |
| 50 | 12,9 |
| 100 | 16,1 |
| 200 | 20,0 |
| 450 | 25,8 |
| 1000 | 30,8 |

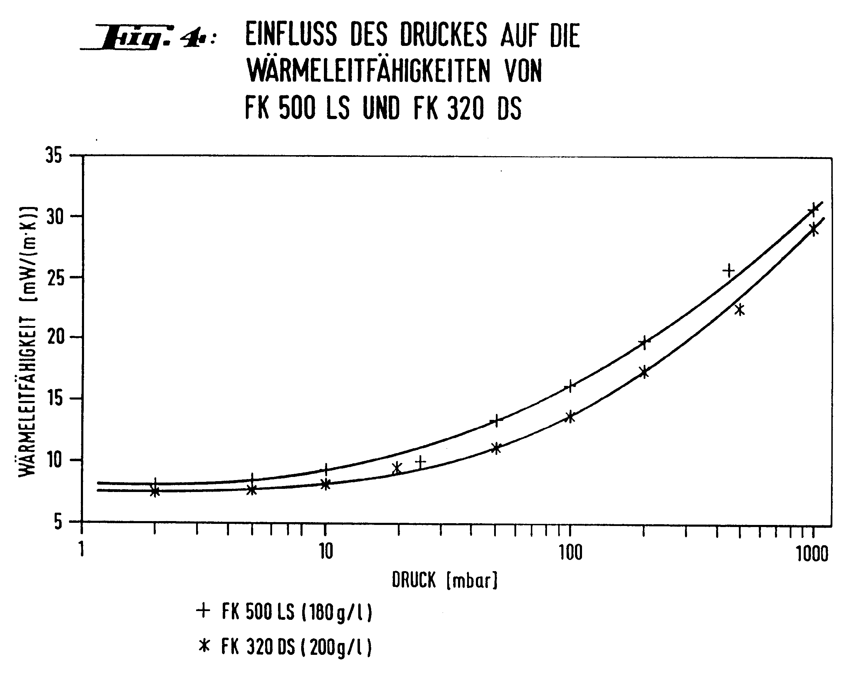

Die Ergebnisse sind in Figur 4 graphisch dargestellt.

2. FK 320 DS

Einfluß des Druckes auf die Wärmeleitfähigkeit Preßdichte: 210 g/l

| Innendruck (mbar) | Wärmeleitfähigkeit (mW/m/K) |
|---|---|
| 2 | 7,8 |
| 5 | 7,9 |
| 10 | 8,0 |
| 20 | 9,3 |
| 50 | 11,1 |
| 100 | 13,8 |
| 200 | 17,6 |
| 500 | 22,5 |
| 1000 | 29,5 |

Die Ergebnisse sind in Figur 4 graphisch dargestellt.

Beispiele für die Berechnung der Lebensdauer von Wärmedämmkörpern

Aus der graphischen Darstellung der Abhängigkeit der Wärmeleitfähigkeit vom Feuchtegehalt des jeweiligen Füllstoffes kann der Grenzwert für die Wasseraufnahme ermittelt werden.

Wärmedämmkörper mit Kieselsäure als Füllstoff und einem Feuchtegehalt entsprechend dem Grenzwert weisen immer noch gute Dämmeigenschaften auf. Bei einem höheren Feuchtegehalt nimmt sowohl die Wärmeleitfähigkeit wie auch der Innendruck (Druck im Wärmedämmkörper) zu. Die Folge ist ein allmähliches Schlechterwerden der Isolationseigenschaften.

Aus den Figuren 1, 2 und 3 lassen sich die Feuchtegehalte für die Kieselsäuren FK 500 LS und FK 320 DS ermitteln, die zulässig sind, wenn sich mit der Wasseraufnahme die Wärmeleitfähigkeiten der Wärmedämmstoffe um maximal 25 % verschlechtern dürfen. Dabei wird von Kieselsäuren ausgegangen, die nach DIN 55 921 getrocknet wurden.

Ergebnisse:

FK 500 LS    Grenzwert bei Feuchtegehalt 7 %

FK 320 DS    Grenzwert bei Feuchtegehalt 6 %

Bei bekannter Kieselsäure-Einwaage und Wärmedämmkörperabmessungen berechnen sich diese Grenzwerte (maximal zulässige Wassermenge) gemäß der Gleichung:

$$\text{maximale Wassermenge (g)} = \frac{\text{Grenzwert (\%)}}{100\ (\%)} \times \text{Masse Kieselsäure}$$

1. FK 500 LS        Grenzwert: Feuchtegehalt 7 %

a) Preßdichte: 180 g/l (Abmessungen 100 cm x 50 cm x 2 cm)

Volumen:                 10 l

Masse Kieselsäure:    1800 g

Max. Wassermenge:    126 g

b) Preßdichte: 200 g/l (Abmessungen 100 cm x 50 cm x 2 cm)

Volumen:                 10 l

Masse Kieselsäure:    2000 g

Max. Wassermenge:    140 g

2. FK 320 DS        Grenzwert: Feuchtegehalt 6 %

a) Preßdichte: 200 g/l (Abmessungen 100 cm x 50 cm x 2 cm)

Volumen:                 10 l

Masse Kieselsäure:    2000 g

Max. Wassermenge:    120 g

b) Preßdichte: 220 g/l (Abmessungen 100 cm x 50 cm x 2 cm)

Volumen:                 10 l

Masse Kieselsäure:    2200 g

Max. Wassermenge:    132 g

Mit Hilfe der folgenden Gleichung läßt sich bei bekannter Folien-Wasserdampf-Durchlässigkeit aus dem Grenzwert die Lebensdauer von Wärmedämmkörpern abschätzen:

$$\text{Lebensdauer} \approx \frac{\text{Grenzwert(maximale Wassermenge)}}{\text{Austauschfläche} \ast \text{Wasserdampf} - \text{Durchlässigkeit}}$$

Dimensionen:

$$\text{Grenzwert (maximale Wassermenge): (g)}$$

$$\text{Austauschfläche:} \qquad (m^2)$$

$$\text{Wasserdampf-Durchlässigkeit:} \qquad \frac{g}{m^2.d}$$

$$\text{Lebensdauer:} \qquad (d)$$

Mit einer Umhüllungsfolie der Wasserdampf-Durchlässigkeit von $0{,}05 \frac{g}{m^2.d}$ bei 23 °C und 85 % rel. Feuchte errechnet sich beispielsweise für einen Wärmedämmkörper, der unter Verwendung von FK 500 LS hergestellt wurde, die folgende Lebensdauer:

| | |
|---|---|
| Füllstoffe: | FK 500 LS |
| Preßdichte: | 180 g/l |
| Abmessungen: | 100 cm x 50 cm x 2 cm |
| Grenzwert (Feuchtegehalt): | 7 Gew.-% (= 126 g) |
| Maximale Wassermenge: | 126 g |
| Austauschfläche: | 1,06 m² |
| Wasserdampfdurchlässigkeit: | 0,05 g/m²/d |

$$\text{Lebensdauer} = \frac{126\,g \cdot m^2 \cdot d}{1{,}06\,m^2 \ast 0{,}05} = 2377\ d = 6{,}5\ a$$

bei 23 ° C und 85 % relativer Feuchte

In den folgenden zwei Tabellen sind Beispiele dafür zusammengestellt, welche Lebensdauerwerte mit bekannten und erfindungsgemäßen Folien (mit niedrigen Wasserdampf-Durchlässigkeiten) für Wärmedämmkörper mit den Fällungskieselsäuren FK 500 LS und FK 320 DS erreicht werden können.

Die angegebenen Werte für Lebensdauer errechnen sich aus den Wasserdampf-Durchlässigkeiten der Folien bei 25 °C und 85 % relativer Feuchte.

Bei niedrigerer Temperatur und/oder niedrigerer relativer Luftfeuchte erhöhen sich die Werte für die Lebensdauer zum Teil beträchtlich. Der Grund dafür sind die stark abnehmenden Wasserdampf-Durchlässigkeiten der ausgewählten Folie bei einer Verringung der Temperatur und der relativen Luftfeuchte.

EP 0 446 486 B1

Wärmedämmkörper-Lebensdauer in Abhängigkeit von den Wasserdampf-Durchlässigkeiten unterschiedlicher Folien

FK 500 LS: maximal zulässiger Feuchtegehalt 7 %
FK 320 DS: maximal zulässiger Feuchtegehalt 6 %

Abmessungen: 100 cm x 50 cm x 2 cm
Austauschfläche: 1,06 m$^2$

| Folien-Typen | Wasserdampf-durchlässig-keit (g/m$^2$/Tag) [*] | Lebensdauer FK 500 LS 180 g/l | Lebensdauer FK 500 LS 200 g/l | Lebensdauer FK 320 DS 200 g/l |
|---|---|---|---|---|
| Fa. Wolff-Walsrode: Combitherm XX 8/12 K 12 50 Folie auf Vinylbasis, biaxial gereckt, beidseitig PVDC lackiert / Polyethylen | 0,4 | 297 Tage | 330 Tage | 283 Tage |
| 4 P Verpackungen Ronsberg: PVDC-beschichtete Kunststoffe PVC/PE/PVDC PVC/PVDE/PE PVC/PVDC | 0,15 | 2,2 Jahre | 2,4 Jahre | 2,1 Jahre |

[*] gemessen bei 23 °C und 85 % relativer Luftfeuchte

EP 0 446 486 B1

Wärmedämmkörper-Lebensdauer in Abhängigkeit von den Wasserdampf-Durchlässigkeiten unterschiedlicher Folien

FK 500 LS: maximal zulässiger Feuchtegehalt 7 %  
FK 320 DS: maximal zulässiger Feuchtegehalt 6 %

Abmessungen: 100 cm x 50 cm x 2 cm  
Austauschfläche: 1,06 $m^2$

| Folien-Typen | Wasserdampf-* durchlässig-keit $(g/m^2/Tag)$ | Lebensdauer FK 500 LS 180 g/l | Lebensdauer FK 500 LS 200 g/l | Lebensdauer FK 320 DS 200 g/l |
|---|---|---|---|---|
| Folie gemäß Ausführungs-beispiel 3 | 0,1 | 3,3 a | 3,6 a | 3,1 a |
| Folie gemäß Ausführungs-beispiel 4 | 0,05 | 6,5 a | 7,2 a | 6,2 a |

* gemesen bei 23 °C und 85 % relativer Luftfeuchte

**Patentansprüche**

1. Formkörper, vorzugsweise plattenförmig, für die Verwendung als Wärmedämmung, hergestellt aus
   a) einem feinverteilten, pulverförmigen bzw. faserförmigen Stoff, der eine Wasseraufnahmekapazität von 4 bis 50 Gew.-% bei 23 °C und 85 % relativer Feuchte hat,
   b) einer metallfreien Umhüllung, die diesen feinverteilten, pulverförmigen bzw. faserförmigen Stoff umhüllt und dabei eine Wasserdampfdurchlässigkeit von 0,02 bis < 0,1 g/(m$^2$.d) bei 23 °C und 85 % relativer Feuchte und Gasdurchlässigkeiten für N$_2$, O$_2$ und CO$_2$ von in der Summe 0,05 bis 0,5 cm$^3$/(m$^2$.d.bar) bei 23 °C aufweist,
   mit der Eigenschaft, Wasser bis zu einer Menge von 2 bis 15 Gew.-% aufzunehmen, ohne daß dabei seine Wärmeleitfähigkeit um mehr als 25 % verschlechtert wird.

2. Formkörper gemäß Anspruch 1, dadurch gekennzeichnet, daß der pulverförmige bzw. faserförmige Stoff in einer mikroporösen Umhüllung getrocknet und die mikroporöse Umhüllung in die metallfreie Umhüllung eingebracht wurde.

3. Formkörper nach den Ansprüchen 1 und 2, dadurch gekennzeichnet, daß die metallfreie Umhüllung eine metallschichtfreie, sperrschichthaltige Mehrschichtfolie ist, und im wesentlichen folgende Schichten aufweist:
   A) eine Schutzlackschicht aus PVDC, die gegebenenfalls eine Polyvinylalkoholschicht enthalten kann,
   B1) gegebenenfalls eine Verbindungs- oder Klebeschicht,
   C1) eine Polyolefinschicht,
   B2) eine Verbindungs- oder Klebeschicht,
   D) eine Ethylenvinylalkoholcopolymerschicht, die gegebenenfalls wenigstens einseitig mit einer Polyamidschicht E durch Koextrusion versehen ist,
   B3) gegebenenfalls eine Verbindungs- oder Klebeschicht,
   C2) eine Polyolefinschicht.

4. Formkörper nach den Ansprüchen 1 bis 3, dadurch gekennzeichnet, daß die Schicht D) beidseitig mit einer Polyamidschicht E verstärkt ist.

5. Formkörper nach den Ansprüchen 1 bis 4, dadurch gekennzeichnet, daß die einzelnen Schichten der Umhüllung folgende Dicke aufweisen:
   Schicht A:   10 bis 20 μm inklusive Lackschicht,
   B1:   0,1 bis 10 μm soweit ein Kleber verwendet wird,
   C1;   5 bis 500 μm
   B2:   0,2 bis 10 μm soweit eine Klebeschicht und 5 bis 500 μm soweit eine Verbindungsschicht verwendet wird,
   D:   1 bis 50 μm,
   E:   5 bis 100 μm,
   B3:   0,2 bis 10 μm
   C2:   5 bis 500 μm.

6. Formkörper nach den Ansprüchen 1 bis 5, dadurch gekennzeichnet, daß wenigstens einzelne Schichten der Umhüllung gereckt sind.

7. Formkörper nach den Ansprüchen 1 bis 6, dadurch gekennzeichnet, daß die Schicht A der Umhüllung biaxial gereckt ist.

8. Formkörper nach den Ansprüchen 1 bis 7, dadurch gekennzeichnet, daß die Schichten B1 und B3 der Umhüllung im wesentlichen aus einem Zweikomponentenpolyurethankleber bestehen.

9. Verfahren zur Herstellung eines Formkörpers zur Wärmedämmung nach den Ansprüchen 1 bis 8, dadurch gekennzeichnet, daß man
   a) gegebenenfalls einen feinverteilten, pulverförmigen bzw. faserförmigen Stoff, der eine Wasseraufnahmekapazität von 4 bis 50 Gew.-% bei 23 °C und 85 % relativer Feuchte hat, unter Bedingungen trocknet, die für das Austreiben des Oberflächenwassers ausreichen,

b) den pulverförmigen bzw. faserförmigen Stoff gegebenenfalls in eine Form verpreßt,

c) den gegebenenfalls getrockneten und gegebenenfalls verpreßten pulverförmigen bzw. faserförmigen Stoff in eine metallfreie Umhüllung, die eine Öffnung zum Evakuieren und eine Wasserdampfdurchlässigkeit von 0,02 bis < 0,1 g/(m2.d) bei 23 °C und 85 % relativer Feuchte und Gasdurchlässigkeiten für $N_2$, $O_2$ und $CO_2$ von in der Summe 0,05 bis 0,5 cm³/(m².d.bar) bei 23 °C aufweist, einbringt,

d) die metallfreie Umhüllung evakuiert und

e) die Evakuierungsöffnung der metallfreien Umhüllung unter Erhalt des Vakuums im Innern der Umhüllung verschließt.

10. Verfahren nach Anspruch 9, dadurch gekennzeichnet, daß man den pulverförmigen bzw. faserförmigen Stoff in einer mikroporösen Umhüllung trocknet.

11. Verfahren nach Anspruch 9, dadurch gekennzeichnet, daß man den pulverförmigen bzw. faserförmigen Stoff in einer mikroporösen Umhüllung verpreßt und gegebenenfalls danach trocknet.

12. Verwendung eines Formkörpers gemäß den Ansprüchen 1 bis 8 als Lager-, Verpackungs- und/oder Transportbehälter für temperaturempfindliche Güter.

13. Verwendung eines oder mehrerer Formkörper gemäß den Ansprüchen 1 bis 8 zur Wärmedämmung von Kühl- oder Gefrierschränken.

## Claims

1. A moulded member, preferably plate-shaped, for use as heat insulation, manufactured from

a) a finely-divided pulverulent or fibrous material having a water absorption capacity of 4 to 50 wt. % at 23°C and 85% relative humidity, and

b) a metal-free cover which envelopes the finely-divided pulverulent or fibrous substance and has a water-vapour permeability of 0.02 to < 0.1 g/(m2.d) at 23°C and 85% relative humidity and a total gas permeability for $N_2$, $O_2$ and $CO_2$ of 0.05 to 0.5 cm³/(m².d.bar) at 23°C,

having the property of absorbing water up to a quantity of 2 to 15% wt.%, without the thermal conductivity being reduced by more than 25%.

2. A moulded member according to claim 1, characterised in that the pulverulent or fibrous substance is dried in a microporous cover and the microporous cover is inserted into the metal-free cover.

3. A moulded member according to claims 1 and 2, characterised in that the metal-free cover is a multilayer sheet free from metal layers and containing a barrier layer and substantially comprising the following layers:

A)       a protective lacquer layer of PVDC,

         optionally containing a polyvinyl alcohol layer,

B1)      optionally a connecting or adhesive layer,

C1)      a polyolefin layer,

B2)      a connecting or adhesive layer,

D)       an ethylene vinyl alcohol copolymer layer optionally provided on at least one side with a polyamide layer E by co-extrusion,

B3)      optionally a connecting or adhesive layer, and

C2)      a polyolefin layer.

4. A moulded member according to claims 1 to 3, characterised in that the layer (D) is reinforced on both sides with a polyamide layer (E).

5. A moulded member according to claims 1 to 4, characterised in that the individual layers of the cover have the following thickness:

Layer A:       10 to 20 µm including the lacquer layer,

B1:      0.1 to 10 µm if an adhesive is used,

C1:      5 to 500 µm

B2:      0.2 to 10 µm if an adhesive layer is used and 5 to 500 µm if a connecting layer is used,

D:       1 to 50 µm

E:       5 to 100 µm

B3:     0.2 to 10 μm
C2:     5 to 500 μm.

6.  A moulded member according to claims 1 to 5, characterised in that at least individual layers of the cover are stretched.

7.  A moulded member according to claims 1 to 6, characterised in that the layer A of the cover is biaxially stretched.

8.  A moulded member according to claims 1 to 7, characterised in that the layers B1 and B2 of the cover substantially consist of a two-component polyurethane adhesive.

9.  A method of manufacturing a moulded member for heat insulation according to claims 1 to 8, characterised in that:
    a) optionally a finely-divided pulverulent or fibrous substance having a water-absorption capacity of 4 to 50 wt. % at 23°C and 85% relative humidity is dried under conditions sufficient to expel the surface water,
    b) optionally the pulverulent or fibrous substance is moulded in a mould,
    c) the pulverulent or fibrous substance, optionally dried and optionally moulded, is placed in a metal-free cover having an opening for evacuation and a water-vapour permeability of 0.02 to < 0.1 $g/(m^2.d)$ at 23°C and 85% relative humidity and a total gas permeability for $N_2$, $O_2$ and $CO_2$ of 0.05 to 0.5 $cm^3/(m^2.d.bar)$ at 23°C.
    d) the metal-free cover is evacuated and
    e) the evacuation opening in the metal-free cover is closed, maintaining the negative pressure inside the cover.

10. A method according to claim 9, characterised in that the pulverulent or fibrous substance is dried in a microporous cover.

11. A method according to claim 9, characterised in that the pulverulent or fibrous substance is moulded in a microporous cover and then optionally dried.

12. Use of a moulded member according to claims 1 to 8 as a storage, packaging and/or transport container for temperature-sensitive goods.

13. Use of one or more moulded members according to claims 1 to 8 for heat-insulation of refrigerators or freezers.


**Revendications**

1.  Solides de moulage, de préférence sous forme de plaques, pour l'utilisation comme isolation thermique, fabriqués à partir d'
    a) une substance finement divisée, pulvérulente ou fibreuse qui possède une capacité d'absorption d'eau allant de 4 à 50 % en poids à 23°C et 85 % d'humidité relative,
    b) une enveloppe dépourvu de métal, qui recouvre cette substance finement divisée, pulvérulente ou fibreuse et manifeste pour cela une perméabilité à la vapeur d'eau, allant de 0,02 à < 0,1 $g/(m^2 . d)$ à 23°C et 85 % d'humidité relative et des perméabilités aux gaz pour $N_2$, $O_2$ et $CO_2$ dans l'ensemble allant de 0,05 à 0,5 $cm^3/(m^2 . d . bar)$ à 23°C,
    avec la propriété d'absorber de l'eau jusqu'à une quantité allant de 2 à 15 % en poids, sans qu'ainsi sa conductibilité thermique soit détériorée de plus que 25 %.

2.  Solides de moulage conformément à la revendication 1, caractérisés en ce que la substance pulvérulente ou fibreuse a été séchée en un revêtement microporeux et que le revêtement microporeux a été incorporé dans le revêtement dépourvu de métal.

3.  Solides de moulage selon les revendications 1 et 2, caractérisés en ce que le revêtement dépourvu de métal est une feuille à plusieurs couches contenant une couche d'arrêt et est dépourvu d'une couche métallique, et possède les couches suivantes pour l'essentiel :

EP 0 446 486 B1

A) une couche de laque de protection en PVDC qui peut contenir le cas échéant une couche d'alcool polyvinylique,

B1) le cas échéant une couche de liaison ou de collage,

C1) une couche de polyoléfine,

B2) une couche de liaison ou de collage,

D) une couche de copolymère éthylène/alcool vinylique, qui peut être pourvue le cas échéant au moins sur une face d'une couche de polyamide E par co-extrusion,

B3) le cas échéant une couche de liaison ou de collage,

C2) une couche de polyoléfine.

4. Solides de moulage selon les revendications 1 à 3, caractérisés en ce que la couche D est renforcée sur les deux faces avec une couche de polyamide E.

5. Solides de moulage selon les revendications 1 à 4, caractérisés en ce que les couches individuelles du revêtement possèdent les épaisseurs suivantes :

Couche A : 10 à 20 $\mu$m y compris la couche de laque,

B1 : 0,1 à 10 $\mu$m pour autant qu'une colle soit utilisée,

C1 : 5 à 500 $\mu$m,

B2 : 0,2 à 10 $\mu$m pour autant qu'une couche de collage soit utilisée et 5 à 500 $\mu$m pour autant qu'une couche de liaison soit utilisée :

D : 1 à 50 $\mu$m

E : 5 à 100 $\mu$m

B3 : 0,2 à 10 $\mu$m

C2 : 5 à 500 $\mu$m.

6. Solides de moulage selon les revendications 1 à 5, caractérisés en ce qu'au moins des couches individuelles du revêtement sont étirées.

7. Solides de moulage selon les revendications 1 à 6, caractérisés en ce que la couche A du revêtement est étirée biaxialement.

8. Solides de moulage selon les revendications 1 à 7, caractérisés en ce que les couches B1 et B3 du revêtement consistent essentiellement en une colle de polyuréthane à deux composants.

9. Procédé d'obtention d'un solide de moulage pour l'isolation thermique selon les revendications 1 à 8, caractérisé en ce que :

a) on sèche le cas échéant une substance finement divisée, pulvérulente ou fibreuse qui possède une capacité d'absorption de l'eau de 4 à 50 % en poids à 23°C et 85 % d'humidité relative, dans des conditions qui suffisent pour l'expulsion de l'eau superficielle,

b) on comprime la substance pulvérulente ou fibreuse le cas échéant dans un moule,

c) on incorpore la substance éventuellement séchée et le cas échéant comprimée, pulvérulente ou fibreuse dans un revêtement dépourvu de métal qui possède une ouverture pour la mise sous vide et une perméabilité à la vapeur d'eau allant de 0,02 à < 0,1 g (m$^2$.d) à 23°C et 85 % d'humidité relative et des perméabilités au gaz pour $N_2$, $O_2$ et $CO_2$ dans l'ensemble allant de 0,05 à 0,5 cm$^3$/(m$^2$ . d . bar) à 23°C,

d) l'on met sous vide le revêtement dépourvu de métal et

e) on obture l'ouverture de mise sous vide du revêtement dépourvu de métal tout en maintenant le vide à l'intérieur du revêtement.

10. Procédé selon la revendication 9, caractérisé en ce que l'on sèche la substance pulvérulente ou fibreuse en une enveloppe microporeux.

11. Procédé selon la revendication 9, caractérisé en ce que l'on comprime la substance pulvérulente ou fibreuse en un revêtement microporeux et que l'on sèche ensuite le cas échéant.

12. Utilisation d'un solide de moulage conformément aux revendications 1 à 8 comme récipient de stockage, d'emballage et/ou de transport pour des marchandises sensibles à la température.

13. Utilisation d'un ou plusieurs solides de moulage selon les revendications 1 à 8 pour l'iso- lation thermique pour des réfrigérateurs ou des congélateurs.

26

**Fig. 1:** WÄRMELEITFÄHIGKEIT VON FK 500 LS ALS FUNKTION DES FEUCHTEGEHALTES

DRUCK [mbar]

WÄRMELEITFÄHIGKEIT [mW/(m·K)]

FEUCHTEGEHALT [Gew.-%]

+ WÄRMELEITFÄHIGKEIT
* DRUCK IM PANEL
FEUCHTE MIT MIKROWELLE EINGESTELLT
PRESSDICHTE: 200 g/l

**Fig. 2:** WÄRMELEITFÄHIGKEIT VON FK 500 LS ALS FUNKTION DES FEUCHTEGEHALTES

+ WÄRMELEITFÄHIGKEIT

* DRUCK IM PANEL

FEUCHTE IM TROCKENSCHRANK EINGESTELLT

PRESSDICHTE: 200 g/l

EP 0 446 486 B1

Fig. 3: WÄRMELEITFÄHIGKEIT VON FK 320 DS ALS FUNKTION DES FEUCHTEGEHALTES

+ WÄRMELEITFÄHIGKEIT
\* DRUCK IM PANEL
FEUCHTE IM TROCKENSCHRANK EINGESTELLT
PRESSDICHTE: 210 g/l

EP 0 446 486 B1

**Fig. 4:** EINFLUSS DES DRUCKES AUF DIE WÄRMELEITFÄHIGKEITEN VON FK 500 LS UND FK 320 DS

+ FK 500 LS (180 g/l)

* FK 320 DS (200 g/l)